# FASCICULE DE BREVET EUROPEEN

(11) **EP 2 771 201 B1**
(45) Date de publication et mention de la délivrance du brevet: **04.11.2015**
(21) Numéro de dépôt: 12773054.7
(22) Date de dépôt: 18.09.2012
(51) Int. Cl.: B60K 20/02, F16H 59/02, F16H 59/04, G05G 1/06

(54) **SYSTEME DE FIXATION D'UN POMMEAU D U LEVIER DE CHANGEMENT DE VITESSES SUR UN SOUFFLET**
SYSTEM ZUM FIXIEREN DES KNOPFS EINES GETRIEBESCHALTHEBELS FÜR EINEN LADERAUM
SYSTEM FOR FIXING THE KNOB OF A GEAR SHIFT LEVER TO A BOOT

(30) Priorité: 25.10.2011 FR 1159670
(43) Date de publication de la demande: 03.09.2014
(73) Titulaire: Renault S.A.S., 92100 Boulogne-Billancourt (FR)
(72) Inventeur: MAILLARD, Jean-Pierre, 78790 Septeuil (FR)
(86) Numéro de dépôt international: PCT/FR2012/052083
(87) Numéro de publication internationale: WO 2013/060954

(56) Documents cités:
- EP-A2- 0 194 703
- WO-A1-02/01093
- DE-U1- 20 217 387
- FR-A1- 2 476 346

## Description

L'invention a pour domaine technique les boîtes de vitesses et plus particulièrement les leviers de boîte de vitesses.

Les leviers de commande externes de changement de vitesses communément appelés leviers de vitesses sont généralement terminés par un pommeau permettant une préhension facilitée du dispositif. Afin de masquer la base du levier pour éviter l'endommagement du boîtier de commande de vitesses ou d'éventuelles blessures de l'utilisateur, un soufflet est disposé autour de la base du levier afin de masquer la zone située entre le pommeau et le plancher ou la planche de bord. Un tel soufflet est généralement fixé par emboîtement d'un collier disposé au sommet du soufflet, interagissant avec une gorge située sur le pommeau. Une telle fixation est soumise à des sollicitations lors des changements de vitesses qui peuvent mener à une désolidarisation entre le soufflet et le pommeau. Par ailleurs, certaines interventions requièrent un accès au levier de boîte de commande de vitesses ou à la partie accessible par l'habitacle de cette boîte. Lors d'interventions requérant un tel accès, il est habituellement nécessaire de procéder au retrait complet du pommeau et du soufflet, ce qui génère un coût supplémentaire.

WO 02/01093 A1 divulgue un système de fixation d'un pommeau sur un soufflet d'un levier de changement de vitesses, le soufflet étant muni d'une bague de style.

Il existe donc un besoin pour un système de fixation fiable malgré les sollicitations dues au changement de vitesses.

Il existe également un besoin pour un système de fixation permettant un accès facilité à la partie supérieure du boîtier de commande de vitesses.

On propose un système de fixation d'un pommeau de vitesses sur un soufflet d'un levier de changement de vitesses par le système de fixation muni d'une bague de style. Le système comprend au moins deux plots présents sur un insert solidaire du pommeau de vitesses, et possédant chacun une empreinte concave,
au moins deux entailles permettant le passage des plots lors du montage du pommeau sur l'ensemble formé par le soufflet et la bague de style, et
au moins deux empreintes en saillie aptes à coopérer avec les empreintes concaves des plots de l'insert,

les entailles et les empreintes en saillie étant comprises sur la bague de style,
la bague de style étant apte à subir une rotation par rapport au pommeau de vitesses et assurer une fixation solidaire du soufflet de vitesses avec le pommeau de vitesses par le système de fixation.

Un tel système présente l'avantage d'un montage et d'un démontage facilités combinés à une fixation résistante du soufflet avec le pommeau grâce à la fixation par rotation, rotation qui ne fait pas partie des sollicitations auxquelles est soumis le levier de vitesses.

Les plots peuvent être répartis uniformément sur la périphérie de la bague de style.

Ils présentent l'avantage d'une répartition de l'effort de serrage.

Les empreintes concaves et les empreintes en saillie peuvent être cylindriques. Cela présente l'avantage d'une usure restreinte des empreintes tout en assurant une résistance à la rotation élevée.

Le système de fixation présente l'avantage de permettre un accès facile au boîtier de commande de vitesses, ainsi qu'une base solide pour l'assemblage du pommeau sur le soufflet.

D'autres buts, caractéristiques et avantages apparaîtront à la lecture de la description suivante donnée uniquement en tant qu'exemple non limitatif et faite en référence aux dessins annexés sur lesquels :
- la figure 1 illustre un levier de boîte de vitesses comprenant une bague de style,
- la figure 2 illustre une bague de style en position de montage, et
- la figure 3 illustre une bague de style en position verrouillée.

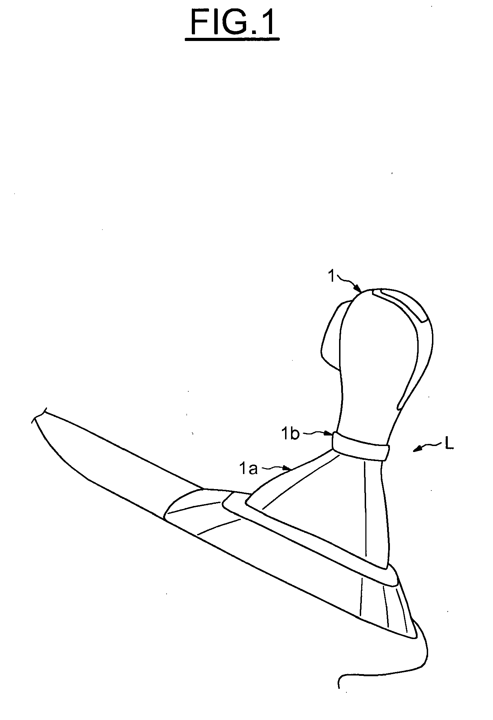

Sur la figure 1, on a représenté une vue de coté d'un levier L de changement de vitesses pour véhicule automobile sortant du boîtier de commande de vitesses fixé au plancher ou à la planche de bord du véhicule. Le levier L comprend un pommeau 1 destiné à être saisi manuellement pour actionner la boîte de vitesses, un soufflet 1a assemblé sur la zone de base du levier et une bague de style 1b disposée entre le pommeau et le soufflet et à laquelle est rendue solidaire le soufflet 1a.

Le soufflet la est assemblé sur le levier et le pommeau est fixé sur le soufflet au moyen d'un système de fixation selon l'invention. Le boîtier de commande de vitesses est interfacé par ailleurs avec la boîte de vitesses afin de transmettre les requêtes de changement de rapports du conducteur à la boîte de vitesses.

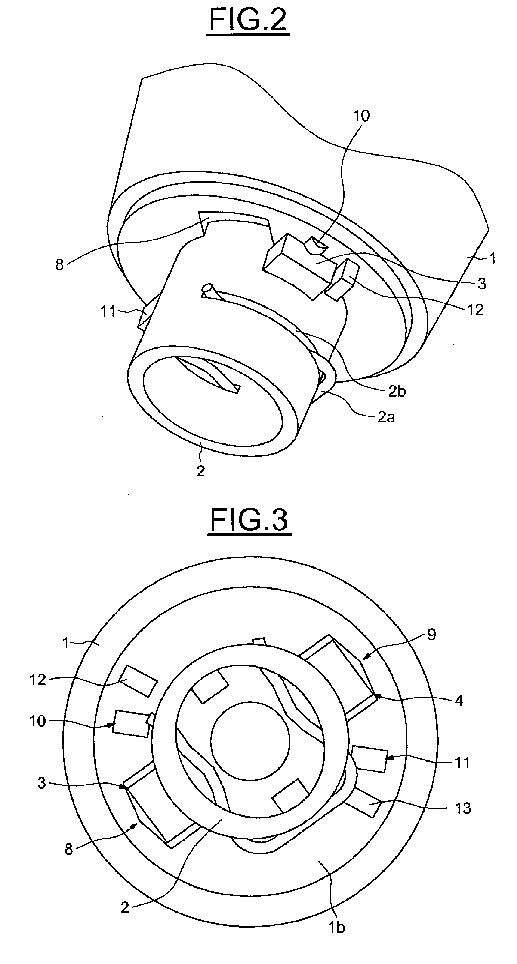

Sur la figure 2, on peut voir que le système de fixation comprend un insert 2 assurant la liaison mécanique entre le pommeau 1 et le levier sortant du boîtier de commande de vitesses.

Lors du montage, le soufflet 1a est monté autour du levier de vitesse de sorte que le levier sorte du soufflet à travers la bague de style 1b. Le pommeau 1 est ensuite interfacé avec le levier de sorte qu'un clip 2a inséré dans une rainure 2b de l'insert 2 solidaire du pommeau 1 coopère avec un dispositif complémentaire solidaire du levier sortant du boîtier de commande de vitesses. Le montage du pommeau 1 est achevé en réalisant une rotation de la bague de style 1b permettant la fixation solidaire du soufflet 1a sur le pommeau 1. Cette étape de montage est plus amplement explicitée ci-dessous.

Sur la figure 2, on peut voir l'insert 2 du pommeau 1 du levier de vitesses comportant deux plots opposés 3,4. Chaque plot opposé 3,4 comprend une empreinte concave 5,6, de préférence cylindrique, sur la face la plus proche du pommeau de vitesses 1.

Sur la figure 3, on peut voir que la bague de style 1b possède deux entailles 8,9 permettant le passage des plots opposés 3,4 lors du montage du pommeau 1 sur l'ensemble formé par le soufflet 1a et la bague de style 1b.

La bague de style 1b comporte également deux empreintes cylindriques en saillie 10,11 qui, lors de l'opération de fixation par rotation de la bague de style 1b avec l'insert 2 du pommeau 1 viennent en coïncidence avec les empreintes cylindriques 5,6. Ceci est illustré par la figure 2. Les deux plots 3,4, formés sur l'insert du pommeau 1, présentant chacun une empreinte concave 5,6, ainsi que les deux entailles 8,9 et les empreintes en saillies 10,11 ménagées sur la bague de style 1b, sont compris dans un système de fixation du pommeau 1 sur le soufflet 1a.

La bague de style 1b comprend également deux butées 12,13. Ces butées empêchent la rotation des plots opposés 3,4 au delà de la position permettant la coïncidence des empreintes cylindriques 5,6 de l'insert 2 avec les empreintes cylindriques en saillies 10 et 11 de la bague de style 1b.

Les butées 12,13 permettent d'avoir un retour d'information franc à la fin de l'assemblage du soufflet et de la bague avec le pommeau du levier de vitesses. L'opérateur est alors averti de la rotation complète de la bague de style 1b et de la fin de la phase d'assemblage. Les butées 12 et 13 servent également de détrompeurs relatifs au mouvement de rotation à appliquer pour désolidariser la bague de style 1b de l'insert 2 du pommeau 1 de levier de vitesses.

Le système de fixation permet un démontage aisé du pommeau du levier de changement de vitesses par rotation en sens inverse de la bague de style. Le pommeau ainsi dégagé, il est possible d'intervenir sur le boîtier de commande de vitesses, sans toucher au soufflet 1a. Ceci est avantageux par exemple pour le déblocage manuel du système de blocage du levier de vitesses en position parking (« shift lock » en langue anglaise) sur une commande de vitesses de boîte automatique.

## Revendications

1. Système de fixation d'un pommeau (1) sur un soufflet (1a) d'un levier de changement de vitesses, le soufflet étant muni d'une bague de style (1b) **caractérisé en ce qu'**il comprend :
au moins deux plots (3,4) présents sur un insert (2) solidaire du pommeau (1) et possédant chacun une empreinte concave (5,6),
au moins deux entailles (8,9) permettant le passage des plots (3,4) lors du montage du pommeau (1) sur l'ensemble formé par le soufflet (1a) et la bague de style (1b), et
au moins deux empreintes en saillie (10,11) aptes à coopérer avec les empreintes concaves (5,6) des plots (3,4) de l'insert (2),
les entailles (8,9) et les empreintes en saillie (10,11) étant comprises sur la bague de style (1b),
la bague de style (1b) étant apte à subir une rotation par rapport au pommeau de vitesses (1) et assurer une fixation du soufflet de vitesses (la) sur le pommeau (1) par le système de fixation.

2. Système de fixation selon la revendication 1, dans lequel les plots (3,4) sont répartis uniformément sur la périphérie de la bague de style (1b).

3. Système de fixation selon l'une des revendications 1 et 2, dans lequel les empreintes concaves (5,6) et les empreintes en saillie (10,11) sont cylindriques.

## Patentansprüche

1. System zum Befestigen eines Knaufs (1) an einer Manschette (1a) eines Gangschalthebels, wobei die Manschette mit einem Stilring (1b) versehen ist, **dadurch gekennzeichnet, dass** es Folgendes umfasst:
mindestens zwei Höcker (3, 4), die auf einem fest mit dem Knauf (1) verbundenen Einsatz (2) vorliegen und jeweils einen konkaven Eindruck (5, 6) besitzen,
mindestens zwei Einkerbungen (8, 9), die den Durchgang der Höcker (3, 4) bei der Montage des Knaufs (1) an der durch die Manschette (1a) und den Stilring (1b) gebildeten Anordnung gestatten, und
mindestens zwei vorragende Eindrücke (10, 11), die geeignet sind, mit den konkaven Eindrücken (5, 6) der Höcker (3, 4) des Einsatzes (2) zusammenzuwirken,
wobei die Einkerbungen (8, 9) und die vorragenden Eindrücke (10, 11) am Stilring (1b) vorliegen,
wobei der Stilring (1b) geeignet ist, bezüglich des Gangschalthebelknaufs (1) gedreht zu werden und eine Befestigung der Gangschaltmanschette (1a) am Knauf (1) durch das Befestigungssystem zu gewährleisten.

2. Befestigungssystem nach Anspruch 1, bei dem die Höcker (3, 4) gleichmäßig über den Umfang des Stilrings (1b) verteilt sind.

3. Befestigungssystem nach einem der Ansprüche 1 und 2, wobei die konkaven Eindrücke (5, 6) und die vorragenden Eindrücke (10, 11) zylindrisch sind.

## Claims

1. System for fixing a knob (1) to a boot (1a) of a gear shift lever, the boot being provided with a style ring (1b), **characterized in that** it comprises:
at least two studs (3, 4) present on an insert (2) secured to the knob (1) and each having a concave imprint (5, 6),
at least two cutouts (8, 9) allowing the studs (3, 4) to pass therethrough when mounting the knob (1) on the assembly formed by the boot (1a) and the style ring (1b), and
at least two projecting imprints (10, 11) capable of co-operating with the concave imprints (5, 6) of the studs (3, 4) of the insert (2),
the cutouts (8, 9) and the projecting imprints (10, 11) being included on the style ring (1b),
the style ring (1b) being capable of being rotated relative to the gear shift knob (1) and of being fixed to the gear shift boot (1a) to the knob (1) via the fixing system.

2. Fixing system according to Claim 1, in which the studs (3, 4) are distributed uniformly over the periphery of the style ring (1b).

3. Fixing system according to either of Claims 1 and 2, in which the concave imprints (5, 6) and the projecting imprints (10, 11) are cylindrical.
